# FASCICULE DE BREVET EUROPEEN

(11) **EP 1 817 212 B1**
(45) Date de publication et mention de la délivrance du brevet: **23.11.2011**
(21) Numéro de dépôt: 05807267.9
(22) Date de dépôt: 23.09.2005
(51) Int. Cl.: B60R 21/34

(54) **FACE AVANT COMPORTANT UN DISPOSITIF DE PROTECTION CONTRE LES CHOCS**
VORDERWAND EINES KRAFTFAHRZEUGS MIT EINER AUFPRALLSCHUTZVORRICHTUN
FRONT PANEL COMPRISING AN IMPACT PROTECTION DEVICE

(30) Priorité: 30.09.2004 FR 0410347
(43) Date de publication de la demande: 15.08.2007
(73) Titulaire: Valeo Systèmes Thermiques, 78321 Le Mesnil Saint-Denis (FR)
(72) Inventeur: GUINEHUT, Sébastien, 92130 Issy les Moulineaux (FR)
(86) Numéro de dépôt international: PCT/FR2005/002369
(87) Numéro de publication internationale: WO 2006/035150

(56) Documents cités:
- DE-A1- 19 911 832
- DE-A1- 19 911 833
- FR-A- 2 445 783
- GB-A- 2 336 812
- GB-A- 2 337 028
- US-A- 1 772 906

## Description

L'invention concerne un dispositif de protection contre les chocs pour un module de face avant de véhicule automobile, du type comportant une armature pour amortir un choc frontal.

Un module de face avant est un élément de structure susceptible d'intégrer divers équipements du véhicule, tels .que projecteurs, clignotants, avertisseur sonore, échangeur thermique, groupe moto-ventilateur ou module de refroidissement complet, etc.

Le module, ainsi pourvu de ses équipements, constitue un élément unitaire préparé et livré par équipementier, prêt à être monté sur le véhicule par le constructeur. Le montage de ce module unitaire se fait par raccordement à des éléments de structure latéraux du véhicule, tels que les longerons, ailes ou coque, puis mise en place d'un pare-chocs ou bouclier frontal rapporté sur le module.

La face avant, du fait de son positionnement, est l'élément de contact qui est sollicité lors d'un choc frontal. Elle est notamment prévue pour absorber des chocs. Ces chocs sont généralement classés dans trois catégories utilisées dans les normes européennes.

La première concerne les "chocs petite vitesse", centrés décalés ou coin, dont la vitesse est comprise entre 2,5 et 4 km/h. La deuxième catégorie concerne les "chocs moyenne vitesse" dont la vitesse est d'environ 16 km/h. Enfin, la troisième catégorie concerne les "chocs grande vitesse", dont la vitesse est comprise entre 56 et 65 km/h.

La variété de ces chocs amène les organismes gouvernementaux à mettre en place des réglementations de plus en plus strictes afin de protéger les conducteurs et leur environnement dans le cadre de ces chocs.

Les faces avant de véhicules automobiles sont ainsi munies de pare-chocs destinés à absorber les chocs frontaux des véhicules pour protéger les passagers. Ces pare-chocs sont utilisés pour absorber des chocs avec des éléments extérieurs très variés, tels que d'autres véhicules, des murs ou des poteaux.

Néanmoins, ces pare-chocs sont susceptibles de générer de sérieux dommages en cas de choc frontal à grande vitesse avec un piéton. On observe dans ces cas que de sévères dommages sont faits au piéton, et plus particulièrement à sa jambe (qui inclut l'ensemble fémur - genou - tibia) ainsi qu'à sa hanche ou sa tête lorsque c'est un enfant. De ce fait, on a proposé des pare-chocs comportant deux zones d'impact, comme le décrit le document EP 1 039 782, la deuxième zone d'impact étant destinée à empêcher la jambe de basculer en dessous du véhicule.

Une face avant selon le préambule de la revendication 1 est décrit dans DE 19911832.

Les dispositifs de l'art antérieur ne proposent pas une protection optimale de la jambe et du reste du corps du piéton qui permette d'éviter des dégâts conséquents. Ces dispositifs ne prévoient pas non plus la protection du reste du corps du piéton, telle sa hanche, qui est susceptible d'être endommagée lors d'un "choc piéton". Un choc piéton désigne l'interaction entre la partie avant d'un véhicule et la jambe (qui inclut l'ensemble fémur - genou - tibia) d'un piéton qu'il percute ainsi que sa hanche ou sa tête lorsque c'est un enfant.

L'invention vise à améliorer la situation.

Elle propose à cet effet un dispositif de protection contre les chocs pour une face avant de véhicule automobile comportant une première armature pour amortir un choc frontal, qui comporte en outre une deuxième et une troisième armatures situées de part et d'autre de la première armature, de manière à créer des points d'impacts à différents niveaux d'une jambe lors d'un choc piéton.

Un tell dispositif permet de préserver la jambe d'un piéton loris d'un choc piéton en offrant par les armatures trois points d'appui qui permettent de préserver le genou en répartissant le choc, sans casser la jambe. L'utilisation de trois armatures permet une plus grande stabilité de la jambe lors du choc piéton ce qui tend à limiter tant la rotation que le cisaillement lors du choc. Cela permet également de protéger la hanche du piéton ou sa tête si c'est un enfant, et offre une projection en avance sur les exigences légales.

Avantageusement la première et la deuxième armature comportent chacune une poutre pare-chocs, au moins une des ces armatures comportant un absorbeur rapporté sur la poutre pare-chocs, et elles sont sensiblement alignées selon un axe d'alignement sensiblement vertical, la première et la deuxième armature se situant derrière un bouclier frontal.

Dans une première variante, une distance selon l'axe d'alignement des première et deuxième armatures, entre une extrémité de la première armature et une extrémité d'un capot que comporte le véhicule est sensiblement inférieure ou égale à 130 mm, la rigidité de la poutre de la deuxième armature est sensiblement inférieure ou égale à celle de la poutre de la première armature, et la première et la deuxième armatures comportent chacune un absorbeur rapporté sur la poutre pare-chocs, l'absorbeur de la première armature ayant une rigidité sensiblement supérieure ou égale à celle de l'absorbeur de la deuxième armature.

Dans une seconde variante une distance selon l'axe d'alignement des première et deuxième armatures, entre une extrémité de la première armature et une extrémité d'un capot que comporte le véhicule est sensiblement supérieure ou égale à 130 nm, la rigidité de la poutre de la deuxième armature est sensiblement inférieure ou égale à celle de la pouture de la première armature, et la première et la deuxième armatures comportent chacune un absorbeur rapporté sur la poutre pare-chocs, l'absorbeur de la première armature ayant une rigidité sensiblement inférieure ou égale à celle de l'absorbeur de la deuxième armatures.

De tels dispositifs sont particulièrement adaptés à tous types de véhicules et notamment à tous dessins de parties avant de véhicules.

Selon une autre variante de l'invention, la troisième armature comporte un absorbeur rapporté sur un support ou intégré à celui-ci. Cela permet d'utiliser le troisième point d'appui pour protéger la hanche du piéton ou sa tête si c'est un enfant.

L'invention concerne également une face avant de véhicule : automobile comportant un dispositif comme décrit ci-dessus.

L'invention et ses avantages apparaîtront plus avant dans la description qui suit d'exemples donnés à titre illustratif et non limitatif avec référence aux dessins annexés sur desquels :

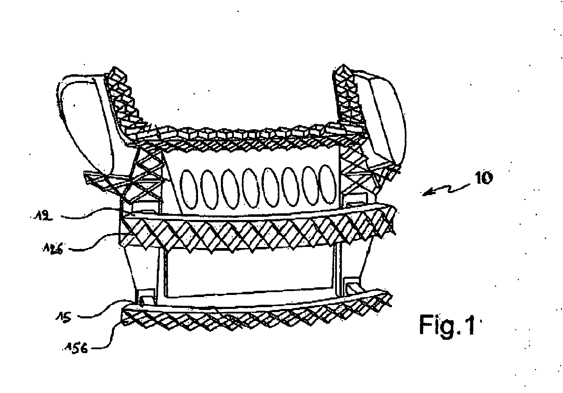

- la figure 1 représente une vue schématique en perspective d'une première variante d'une face avant selon l'invention ;

Une vue schématique en coupe de deux jambes peut être représentée et modélisée par deux moitiés reliées par un genou subissant des déformations associées à un choc piéton dû à un véhicule automobile. L'effet d'un cisaillement sur la jambe d'un piéton peut être représenté par un décalage d'une distance référencée d1 entre les deux parties de la jambe. La jambe montre l'effet d'un choc provoquant une rotation d'un angle référencé α de la jambé au niveau du genou. A l'état normal, les deux parties et le genou sont alignées selon l'axe XX.

La figure 1 représente un dispositif de protection contre les chocs selon l'invention qui va permettre d'éviter les déformations de la jambe.

Le dispositif 10 de la figure 1 comporte une première armature 12 située sensiblement au niveau du genou lors d'un choc, une deuxième armature 15 située en-dessous de l'armature 12 et une troisième armature située au-dessus de l'armature 12.

L'armature 12 comporte une poutre pare-chocs et un boîtier amortisseur de chocs ainsi qu'un absorbeur 126 situé entre la poutre et un bouclier. L'armature 15 comporte une poutre pare-chocs et un boîtier amortisseur de chocs, ainsi qu'un absorbeur 156, recouverts d'un bouclier.

Ainsi, les armatures 12 et 15 se situent derrière des boucliers.

L'armature est une traverse métallique. Elle pourrait néanmoins être en matière hydride de métal/matière plastique, ou entièrement en matière plastique comme par exemple un corps creux pouvant contenir un fluide.

Les trois armatures sont en pratique rapportées sur une face avant d'un véhicule ou intégrées à celle-ci. Leurs rôles respectifs lors d'un choc piéton seront décrits ci-après. L'homme du métier pourra envisager l'usage de tous les boîtiers amortisseurs de chocs à sa connaissance, comme par exemple les boîtiers amortisseurs de chocs en deux parties. De la même manière, il saura envisager divers types de traverses.

Un autre dispositif selon l'invention propose que le véhicule comporte ainsi une partie avant comportant un capot recouvrant la partie avant qui comporte en outre un module de refroidissement et le dispositif 10. Si le point B représente l'extrémité avant du capot dans le repère XZ ou "ligne de référence du bord avant du capot" et si le point C représente l'extrémité du dispositif 10 selon l'axe X ou "ligne dé 1 référence du pare-chocs", alors L1 est la distance entre B et C selon l'axe X et H1 est la distance séparant B et C selon l'axe Z. Ces deux distances sont définies dans les normes européenne en vigueur et permettent de différencier deux variantes de l'invention.

Selon un premier mode de réalisation dans lequel la distance L1 est considérée comme faible, c'est-à-dire inférieure à 130 la partie avant est alors relativement "droite", c'est-à-dïre' que les points d'extrémité de la partie avant du véhicule dans la direction X sont sensiblement alignés selon l'axe Z.

Dans l'exemple ici décrit, les deux poutres que comportent respectivement la première armature 12 et la deuxième armature 15 sont sensiblement alignées selon l'axe Z comme le montre la droite tracée entre C1 représentant l'extrémité de la première poutre et un point C2 représentant l'extrémité selon l'axe X de la deuxième poutre. Ces deux poutres sont séparées selon l'axe Z par une distance Zm qui est, dans l'exemple ici décrit, de 140 mm. On peut envisager des distances Zm supérieures à 140 mm, et on peut également envisager un retrait de C2 par rapport à C1 selon l'axe X pouvant aller jusqu'à 80 mm.

Dans la variante où la partie avant est relativement droite, on va chercher à absorber le choc avec la jambe en la maintenant droite et en répartissant les efforts sur celle-ci d'une manière sensiblement équitable. Ainsi, on prévoit que la rigidité de la première poutre est d'environ 4000 N/min, et la rigidité de la deuxième poutre, prévue pour être inférieure à celle de la première poutre, est d'environ 2000 N/mm.

On prévoit que la rigidité de l'absorbeur 156 est inférieure à celle de l'absorbeur 126. Ainsi, le niveau moyen de plateau de la mousse (le niveau moyen de plateau correspond à l'effort typique à partir duquel la mousse commence à se déformer) pour l'absorbeur 126 doit être d'au moins 0,3 MPa et celui de l'absorbeur 156 doit d'être d'au moins 0,1 MPa.

Il est également prévu que l'absorbeur 126 ait une profondeur selon l'axe X supérieure à 60 mm et que l'absorbeur 156 ait une profondeur selon l'axe X supérieure à 40 mm.

Lorsque le dispositif 10 vient en contact avec la jambe, les armatures 12 et 15 voient leurs absorbeurs respectifs 126 et 156 se déformer, leur positionnement relatif assurant ainsi deux points de contact. La troisième armature vient servir de troisième point de contact lorsque les absorbeurs 126 et 156 ont fini de se déformer.

D'une manière pratique, la première armature tend à amortir le choc avec la jambe et à éviter le cisaillement de celle-ci, la deuxième armature tend à limiter la rotation et le cisaillement de la jambe, et la troisième armature tend à limiter la rotation de la jambe. La troisième armature est également utile pour protéger la hanche du piéton ou sa tête lorsque c'est un enfant.

Une autre variante du dispositif selon l'invention propose que la distance L1 est supérieure à 130 mm. La partie avant du véhicule est alors beaucoup moins "droite" et l'on va dimensionner les deux armatures 12 et 15 pour en tenir compte.

Dans cette variante, la troisième armature étant située en retrait selon l'axe X par rapport aux deux autres armatures 12 et 15, on va chercher dans un premier temps à faire tourner la jambe, de manière à ce que celle-ci vienne en bout de course s'appuyer sur les trois armatures en même temps.

A cent effet, on prévoit que la rigidité de la poutre est supérieure ou égale à celle de la deuxième poutre. Dans l'exemple ici décrit, la deuxième poutre a une rigidité de 2000. N/mm et la première poutre a une rigidité égale à 4000.N/mm.

Pour ce qui est des absorbeurs 126 et 156, on prévoit que l'absorbeur 156 est plus rigide que l'absorbeur 126. Dans l'exemple ici décrit, le niveau moyen de plateau de la mousse doit être d'au moins 0,2 MPa pour l'absorbeur 126 et d'au moins 0,3 MPa pour l'absorbeur 156.

Il est également prévu que l'absorbeur 126 ait une profondeur selon l'axe X supérieure à 50 mm et que l'absorbeur 156 ait une profondeur selon l'axe X supérieure à 30 mm.

L'absorbeur 156 est ainsi globalement plus rigide que l'absorbeur 126 et va ainsi constituer un point de rotation pour la jambe lors du choc piéton. Alors que la jambe tourne et que les absorbeurs 126 et 156 sont déformés, elle fïnit sa course sur la troisième armature ce qui assure son maintien droit et par conséquent limite considérablement toute rotation ou cisaillement du genou.

Dans ces deux variantes, il est prévu que l'armature 12 est située selon l'axe Z de telle manière qu'une fois montée sur un véhicule elle se trouve sensiblement en regard du genou. Il est par ailleurs prévu pour l'absorbeur 126 une épaisseur E selon l'axe Z d'au moins 60 mm de manière à couvrir l'ensemble du genou de la jambe.

Le genou et la première armature 12 ne sont pas strictement en regard. Dans l'exemple ici décrit, la cote du genou selon Z est 493 et celle du la première armature 12 est 513.. Afin de compenser ce décalage selon Z, l'absorbeur 126 présente un profil et une géométrie adaptés.

Un autre mode de réalisation propose une face avant intégrant un dispositif selon l'invention dans lequel la troisième armature est plus développée.

Cette face avant comporte un dispositif selon l'invention comprenant trois armatures. La troisième armature est différente en ce qu'elle comporte un support pour un absorbeur, situé entre des jambages qui définissent un emplacement pour des projecteurs. L'absorbeur est prévu pour être en mousse polyuréthanne, mais, comme les autres absorbeurs 126 et 156, pourrait être en d'autres matières spécifiées plus loin.

La troisième armature est montée sur la face avant soit en l'intégrant aux jambages, soit en la fixant sur ceux-ci, comme représenté sur la figure qui sera décrite ci-après.

Une variante de l'exemple précédent dans laquelle la face avant comporte en outre une traverse. La traverse est ainsi placée entre les projecteurs et au niveau du support, juste derrière celui-ci. Dans cette variante, le support peut être soit intégré à la traverse, soit intégré aux jambages, soit fixé aux jambages et à la traverse.

Une autre variante propose que la traverse soit placée sensiblement au-dessus du support. Là encore, le support peut être intégré à la traverse, soit intégré aux jambages, soit fixé aux jambages et à la traverse. Une autre variante propose que la traverse soit placée sensiblement plus bas, et recouvre partiellement le support. Cela permet de créer un volume supplémentaire entre le capot et la traverse pour absorber plus efficacement l'énergie d'un choc avec la hanche d'un piéton ou sa tête si c'est un enfant.

Là encore, le support peut être intégré à la traverse, soit intégré aux jambages, soit fixé aux jambages et à la traverse.

Ces différents modes de réalisation d'une face avant selon l'invention permettent de positionner la traverse plus ou moins en avant par rapport au module de refroidissement, ce qui permet de l'adapter à divers profils de véhicules, tout en conservant une sécurité optimale pour les piétons.

Une autre variante propose que le support soit fixé sur la traverse de manière différente.

Une autre variante propose que l'absorbeur soit intégré au support, lequel est fixé d'une part à la traverse et d' autre part à l'armature 12.

Les absorbeurs envisagés dans le cadre de l'invention comprennent de manière non limitative les mousses polyuréthane, polypropylène expansé, polypropylène modifié élastomère, polypropylène renforcé talc, polyéthylène, les matières plastiques ainsi que toute autre matière connue de l'homme du métier.

La troisième armature pourrait être utilisée de marnière indépendante des deux autres armatures dans le cas de l'absorption et de la prévention lors des chocs piétons, relativement à la hanche du piéton ou à sa tête si c'est un enfant.

## Revendications

1. Face avant apte à être rapportée sur des éléments de structure latéraux d'un véhicule automobile, ladite face avant comportant un dispositif de protection contre les chocs pour une face avant de véhicule automobile pour véhicule automobile comportant une première armature pour amortir un choc frontal, ledit dispositif comportant une deuxième et une troisième armatures situées de part et d'autre de la première armature, de manière à créer dès points d'impacts à différents niveaux d'une jambe lors d'un choc piéton **caractérisé en ce que** la première et la deuxième armature comportent chacune une poutre pare-chocs et **en ce que** la rigidité de la poutre de la deuxième armature est sensiblement inférieure ou égale à celle de la poutre de la première armature.

2. Face avant selon la revendication 1, **caractérisé en ce qu'**au moins une des armatures comporte un absorbeur rapporté sur la poutre pare-chocs.

3. Face avant selon l'une des revendications 1 à 2, **caractérisé en ce que** les première et deuxième armatures sont sensiblement alignées selon un axe d'alignement sensiblement vertical.

4. Face avant selon la revendication 3, **caractérisé en ce qu'**une distance selon l'axe d'alignement des première et deuxième armatures, entre une extrémité de la première armature et une extrémité d'un capot que comporte le véhicule est sensiblement inférieure ou égale à 130 mm.

5. Face avant selon l'une des revendications précédentes, **caractérisée en ce que** la première et la deuxième armatures comportent chacune un absorbeur rapporté sur la poutre pare-chocs, l'absorbeur de la première armature ayant une rigidité sensiblement supérieure ou égale à celle de l'absorbeur de la deuxième armature.

6. Face avant selon la revendication 3, **caractérisé en ce qu'**une distance selon l'axe d'alignement des première et deuxième armatures, entre une extrémité de la première armature et une extrémité d'un capot que comporte le véhicule est sensiblement supérieure ou égale à 130 mm.

7. Face avant selon l'une des revendications 6, **caractérisée en ce que** la première et la deuxième armatures comportent chacune un absorbeur rapporté sur la poutre pare-chocs, l'absorbeur de la première armature ayant une rigidité sensiblement inférieure ou égale à celle de l'absorbeur de la deuxième armature.

8. Face avant selon l'une des revendications 4 à 7, **caractérisé en ce que** la première et la deuxième armature sont séparées par une distance sensiblement supérieure ou égale à 140 mm selon l'axe d'alignement.

9. Dispositif selon l'une des revendications 4 à 8, **caractérisé en ce que** la première armature est placée de sorte qu'elle entre en contact avec le genou d'une jambe d'un piéton lors d'un choc piéton.

10. Face avant selon la revendication 9, **caractérisé en ce que** la première armature comporte un absorbeur dont les dimensions sont plus importantes que celle du genou d'une jambe d'un piéton, de sorte qu'il recouvre ce genou lors d'un choc piéton.

11. Face avant selon la revendication 10, **caractérisé en ce que** la première armature et le genou sont sensiblement décalés selon l'axe d'alignement, et **en ce que** l'absorbeur de la première armature présente un profil prévu pour compenser ce décalage, de sorte qu'elle entre en contact avec le genou d'une jambe d'un piéton lors d'un choc piéton.

12. Face avant selon l'une des revendications 1 à 11, **caractérisé en ce que** la troisième armature comporte un absorbeur rapporté sur un support.

13. Face avant selon l'une des revendications 1 à 11, **caractérisé en ce que** la troisième armature comporte une absorbeur intégré à un support.

14. Face avant selon l'une des revendications 1 à 13, **caractérisé en ce que** les armatures sont en matière métallique ou en matière plastique ou en composé hybride de ces matières.

15. Face avant selon l'une des revendications 1 à 14, **caractérisée en ce que** la poutre pare-chocs de la première armature comporte au moins un boîtier amortisseur de chocs.

16. Face avant selon l'une des revendications 1 à 15, **caractérisé en ce que** la poutre pare-chocs de la deuxième armature comporte au moins un boîtier amortisseur de chocs.

17. Face avant selon l'une des revendications 2 à 16, **caractérisé en ce que** les absorbeurs sont en mousse polyuréthane ou polypropylène expansé ou polypropylène modifié élastomère ou polypropylène renforcé talc ou polyéthylène.

18. Face avant selon l'une des revendications 2 à 17, **caractérisé en ce que** les absorbeurs sont en matière plastique ou en matière plastique renforcée.

19. Face avant pour véhicule automobile selon l'une des revendications précédentes, **caractérisée en ce qu'**elle comporte en outre des jambages.

20. Face avant selon la revendication 19, **caractérisée en ce que** la troisième armature comporte un absorbeur rapporté sur un support logé entre une traverse et les jambages que comporte la face avant du véhicule.

21. Face avant selon la revendication 19, **caractérisée en ce que** la troisième armature (18) comporte un absorbeur intégré à un support logé entre une traverse et les jambages que comporte la face avant du véhicule.

22. Face avant selon l'une des revendications 19 à 21, **caractérisée en ce que** le support est intégré aux jambages.

23. Face avant selon la revendication 19, **caractérisée en ce que** le support est rapporté sur des jambages de la face avant du véhicule.

24. Face avant selon la revendication 20 ou 21, **caractérisée en ce que** le support est intégré à la traverse.

25. Face avant selon la revendication 20 ou 21, **caractérisée en ce que** le support est rapporté sur la traverse et sur les jambages de la face avant du véhicule.

26. Face avant selon la revendication 20 ou 21, **caractérisée en ce que** la traverse est située, lorsque la face avant est montée sur le véhicule, devant un module de refroidissement du véhicule.

27. Face avant selon la revendication 20 ou 21, **caractérisée en ce que** la traverse est située, lorsque la face avant est montée sur le véhicule, derrière un module de refroidissement du véhicule.

28. Face avant selon la revendication 27, **caractérisée en ce que** la traverse comporte une partie recouvrant sensiblement le support.

## Claims

1. Front panel designed to be attached to lateral structural elements of a motor vehicle, said front panel comprising an impact protection device for a motor vehicle front panel, comprising a first reinforcement for damping a frontal impact, said device comprising second and third reinforcements situated on either side of the first reinforcement so as to create impact points at different levels of a leg during a pedestrian impact, **characterized in that** the first and the second reinforcements each comprise a bumper beam, and **in that** the stiffness of the beam of the second reinforcement is substantially less than or equal to that of the beam of the first reinforcement.

2. Front panel according to Claim 1, **characterized in that** at least one of the reinforcements comprises an absorber attached to the bumper beam.

3. Front panel according to either of Claims 1 and 2, **characterized in that** the first and second reinforcements are substantially aligned along a substantially vertical alignment axis.

4. Front panel according to Claim 3, **characterized in that** a distance along the alignment axis of the first and second reinforcements, between one end of the first reinforcement and one end of a hood belonging to the vehicle, is substantially less than or equal to 130 mm.

5. Front panel according to one of the preceding claims, **characterized in that** the first and second reinforcements each comprise an absorber attached to the bumper beam, the absorber of the first reinforcement having a stiffness which is substantially greater than or equal to that of the absorber of the second reinforcement.

6. Front panel according to Claim 3, **characterized in that** a distance along the alignment axis of the first and second reinforcements, between one end of the first reinforcement and one end of a hood belonging to the vehicle, is substantially greater than or equal to 130 mm.

7. Front panel according to Claim 6, **characterized in that** the first and second reinforcements each comprise an absorber attached to the bumper beam, the absorber of the first reinforcement having a stiffness which is substantially less than or equal to that of the absorber of the second reinforcement.

8. Front panel according to one of Claims 4 to 7, **characterized in that** the first and second reinforcements are separated by a distance which is substantially greater than or equal to 140 mm along the alignment axis.

9. Front panel according to one of Claims 4 to 8, **characterized in that** the first reinforcement is placed such that it comes into contact with the knee of a pedestrian's leg during a pedestrian impact.

10. Front panel according to Claim 9, **characterized in that** the first reinforcement comprises an absorber whose dimensions are larger than those of the knee of a pedestrian's leg such that the absorber covers this knee during a pedestrian impact.

11. Front panel according to Claim 10, **characterized in that** the first reinforcement and the knee are substantially offset along the alignment axis, and **in that** the absorber of the first reinforcement has a profile designed to compensate for this offset such that the reinforcement comes into contact with the knee of a pedestrian's leg during a pedestrian impact.

12. Front panel according to one of Claims 1 to 11, **characterized in that** the third reinforcement comprises an absorber attached to a support.

13. Front panel according to one of Claims 1 to 11, **characterized in that** the third reinforcement comprises an absorber integrated with a support.

14. Front panel according to one of Claims 1 to 13, **characterized in that** the reinforcements are made of metal or plastic or of a hybrid combination of these materials.

15. Front panel according to one of Claims 1 to 14, **characterized in that** the bumper beam of the first reinforcement comprises at least one crash box.

16. Front panel according to one of Claims 1 to 16, **characterized in that** the bumper beam of the second reinforcement comprises at least one crash box.

17. Front panel according to one of Claims 2 to 16, **characterized in that** the absorbers are made of polyurethane foam or expanded polypropylene or elastomer-modified polypropylene or talc-reinforced polypropylene or polyethylene.

18. Front panel according to one of Claims 2 to 17, **characterized in that** the absorbers are made of plastic or of reinforced plastic.

19. Front panel for a motor vehicle according to one of the preceding claims, **characterized in that** it additionally comprises pillars.

20. Front panel according to Claim 19, **characterized in that** the third reinforcement comprises an absorber attached to a support housed between a crossmember and the pillars belonging to the front panel of the vehicle.

21. Front panel according to Claim 19, **characterized in that** the third reinforcement (18) comprises an absorber integrated with a support housed between a crossmember and the pillars belonging to the front panel of the vehicle.

22. Front panel according to one of Claims 19 to 21, **characterized in that** the support is integrated with the pillars.

23. Front panel according to Claim 19, **characterized in that** the support is attached to pillars of the front panel of the vehicle.

24. Front panel according to Claim 20 or 21, **characterized in that** the support is integrated with the crossmember.

25. Front panel according to Claim 20 or 21, **characterized in that** the support is attached to the crossmember and to the pillars of the front panel of the vehicle.

26. Front panel according to Claim 20 or 21, **characterized in that**, when the front panel is mounted on the vehicle, the crossmember is situated in front of a vehicle cooling module.

27. Front panel according to Claim 20 or 21, **characterized in that**, when the front panel is mounted on the vehicle, the crossmember is situated behind a vehicle cooling module.

28. Front panel according to Claim 27, **characterized in that** the crossmember comprises a portion substantially covering the support.

## Patentansprüche

1. Frontteil, das an Querstrukturelementen eines Kraftfahrzeugs angefügt werden kann, wobei das Frontteil eine Vorrichtung zum Aufprallschutz für ein Kraftfahrzeugfrontteil mit einem ersten Stützgerüst zum Dämpfen eines Frontalaufpralls aufweist, wobei die Vorrichtung ein zweites und ein drittes Stützgerüst, die sich auf beiden Seiten des ersten Stützgerüstes befinden, um Aufprallstellen auf verschiedenen Höhen eines Beins bei einem Fußgängeraufprall zu schaffen, aufweist, **dadurch gekennzeichnet, dass** das erste und das zweite Stützgerüst jeweils einen Stoßfängerträger aufweisen und dass die Starrheit des Trägers des zweiten Stützgerüsts im Wesentlichen kleiner gleich der des Trägers des ersten Stützgerüsts ist.

2. Frontteil nach Anspruch 1, **dadurch gekennzeichnet, dass** mindestens eines der Stützgerüste einen an den Stoßfängerträger angefügten Dämpfer aufweist.

3. Frontteil nach einem der Ansprüche 1 bis 2, **dadurch gekennzeichnet, dass** das erste und das zweite Stützgerüst im Wesentlichen entlang einer im Wesentlichen vertikalen Ausrichtungsachse ausgerichtet sind.

4. Frontteil nach Anspruch 3, **dadurch gekennzeichnet, dass** ein Abstand entlang der Ausrichtungsachse des ersten und des zweiten Stützgerüstes zwischen einem Ende des ersten Stützgerüsts und einem Ende einer Haube, die am Fahrzeug vorgesehen ist, im Wesentlichen kleiner gleich 130 mm ist.

5. Frontteil nach einem der vorhergehenden Ansprüche, **dadurch gekennzeichnet, dass** das erste und das zweite Stützgerüst jeweils einen Dämpfer aufweisen, der an dem Stoßfängerträger angefügt ist, wobei der Dämpfer des ersten Stützgerüsts eine Starrheit aufweist, die im Wesentlichen größer gleich der des Dämpfers des zweiten Stützgerüsts ist.

6. Frontteil nach Anspruch 3, **dadurch gekennzeichnet, dass** ein Abstand entlang der Ausrichtungsachse des ersten und des zweiten Stützgerüsts zwischen einem Ende des ersten Stützgerüsts und einem Ende einer Haube, die am Fahrzeug vorgesehen ist, im Wesentlichen größer gleich 130 mm ist.

7. Frontteil nach Anspruch 6, **dadurch gekennzeichnet, dass** das erste und das zweite Stützgerüst jeweils einen Dämpfer aufweisen, der an dem Stoßfängerträger angefügt ist, wobei der Dämpfer des ersten Stützgerüsts eine Starrheit aufweist, die im Wesentlichen kleiner gleich der des Dämpfers des zweiten Stützgerüsts ist.

8. Frontteil nach einem der Ansprüche 4 bis 7, **dadurch gekennzeichnet, dass** das erste und das zweite Stützgerüst durch einen Abstand getrennt werden, der im Wesentlichen größer gleich 140 mm entlang der Ausrichtungsachse ist.

9. Frontteil nach einem der Ansprüche 4 bis 8, **dadurch gekennzeichnet, dass** das erste Stützgerüst so angeordnet ist, dass es bei einem Fußgängeraufprall mit dem Knie eines Beins eines Fußgängers in Kontakt tritt.

10. Frontteil nach Anspruch 9, **dadurch gekennzeichnet, dass** das erste Stützgerüst einen Dämpfer aufweist, dessen Abmessungen größer sind als die des Knies eines Beins eines Fußgängers, so dass er dieses Knie bei einem Fußgängeraufprall bedeckt.

11. Frontteil nach Anspruch 10, **dadurch gekennzeichnet, dass** das erste Stützgerüst und das Knie im Wesentlichen entlang der Ausrichtungsachse versetzt sind und dass der Dämpfer des ersten Stützgerüsts ein Profil aufweist, das dazu vorgesehen ist, diesen Versatz auszugleichen, so dass es bei einem Fußgängeraufprall mit dem Knie eines Beins eines Fußgängers in Kontakt tritt.

12. Frontteil nach einem der Ansprüche 1 bis 11, **dadurch gekennzeichnet, dass** das dritte Stützgerüst einen an einem Träger angefügten Dämpfer aufweist.

13. Frontteil nach einem der Ansprüche 1 bis 11, **dadurch gekennzeichnet, dass** das dritte Stützgerüst einen in einem Träger integrierten Dämpfer aufweist.

14. Frontteil nach einem der Ansprüche 1 bis 13, **dadurch gekennzeichnet, dass** die Stützgerüste aus einem metallischen oder Kunststoffmaterial bestehen oder aus einer Kombination aus diesen Materialien gebildet sind.

15. Frontteil nach einem der Ansprüche 1 bis 14, **dadurch gekennzeichnet, dass** der Stoßfängerträger des ersten Stützgerüsts mindestens eine Crashbox aufweist.

16. Frontteil nach einem der Ansprüche 1 bis 15, **dadurch gekennzeichnet, dass** der Stoßfängerträger des zweiten Stützgerüsts mindestens eine Crashbox aufweist.

17. Frontteil nach einem der Ansprüche 2 bis 16, **dadurch gekennzeichnet, dass** die Dämpfer aus Polyurethanschaumstoff oder expandiertem Polypropylen oder elastomermodifiziertem Polypropylen oder talkverstärktem Polypropylen oder Polyethylen bestehen.

18. Frontteil nach einem der Ansprüche 2 bis 17, **dadurch gekennzeichnet, dass** die Dämpfer aus einem Kunststoffmaterial oder einem verstärkten Kunststoffmaterial bestehen.

19. Frontteil für ein Kraftfahrzeug nach einem der vorhergehenden Ansprüche, **dadurch gekennzeichnet, dass** es des Weiteren Pfosten aufweist.

20. Frontteil nach Anspruch 19, **dadurch gekennzeichnet, dass** das dritte Stützgerüst einen Dämpfer aufweist, der an einem zwischen einem Querträger und Pfosten, die am Frontteil des Fahrzeugs vorgesehen sind, aufgenommenen Träger angefügt ist.

21. Frontteil nach Anspruch 19, **dadurch gekennzeichnet, dass** das dritte Stützgerüst (18) einen Dämpfer aufweist, der in einem zwischen einem Querträger und den Pfosten, die am Frontteil des Fahrzeugs vorgesehen sind, aufgenommenen Träger integriert ist.

22. Frontteil nach einem der Ansprüche 19 bis 21, **dadurch gekennzeichnet, dass** der Träger in den Pfosten integriert ist.

23. Frontteil nach Anspruch 19, **dadurch gekennzeichnet, dass** der Träger an den Pfosten des Frontteils des Fahrzeugs angefügt ist.

24. Frontteil nach Anspruch 20 oder 21, **dadurch gekennzeichnet, dass** der Träger in dem Querträger integriert ist.

25. Frontteil nach Anspruch 20 oder 21, **dadurch gekennzeichnet, dass** der Träger an dem Querträger und an den Pfosten des Frontteils des Fahrzeugs angefügt ist.

26. Frontteil nach Anspruch 20 oder 21, **dadurch gekennzeichnet, dass** sich der Querträger, wenn der Frontteil an dem Fahrzeug angebracht ist, vor einem Kühlmodul des Fahrzeugs befindet.

27. Frontteil nach Anspruch 20 oder 21, **dadurch gekennzeichnet, dass** sich der Querträger, wenn der Frontteil an dem Fahrzeug angebracht ist, hinter einem Kühlmodul des Fahrzeugs befindet.

28. Frontteil nach Anspruch 27, **dadurch gekennzeichnet, dass** der Querträger einen Teil aufweist, der den Träger im Wesentlichen bedeckt.
